# EUROPÄISCHE PATENTSCHRIFT

(11) **EP 3 139 084 B1**
(45) Veröffentlichungstag und Bekanntmachung des Hinweises auf die Patenterteilung: **16.05.2018**
(21) Anmeldenummer: 16185594.5
(22) Anmeldetag: 25.08.2016
(51) Int. Cl.: F21V 5/04, G02B 19/00, F21V 7/00, F21V 11/14, F21W 121/00, F21Y 115/10, F21Y 113/13, F21Y 113/17

(54) **BELEUCHTUNGSVORRICHTUNG**
ILLUMINATION DEVICE
DISPOSITIF D'ÉCLAIRAGE

(30) Priorität: 07.09.2015 DE 102015011714
(43) Veröffentlichungstag der Anmeldung: 08.03.2017
(73) Patentinhaber: Bartenbach Holding GmbH, 6071 Aldrans (AT)
(72) Erfinder: Anselm, Christian, 6112 Wattens (AT); Reisecker, Dipl.-Ing. Christian, 6166 Fulpmes (AT)
(74) Vertreter: Thoma, Michael

(56) Entgegenhaltungen:
- EP-A1- 2 031 296
- US-A1- 2011 182 065
- US-A1- 2012 320 102

## Beschreibung

Die vorliegende Erfindung betriftt eine Beleuchtungsvorrichtung, insbesondere in Form von Deckenstrahlern, mit einem Lochpaneel mit zumindest einer Lichtdurchtrittsöffnung sowie einer hinter dem Lochpaneel verblendet angeordneten Linse zum Abgeben eines Lichtstrahlenbündels, das sich von der Linse weg auf das Lochpaneel zu verjüngt, durch die Lichtdurchtrittsöffnung hindurchtritt und sich vom Lochpaneel weg wieder erweitert.

Eine solche Beleuchtungsvorrichtung ist aus der EP 20 31 296 A1 bekannt und wird bisweilen als Lochstrahler bezeichnet. Hierbei werden Leuchtmittel hinter plattenförmigen Verblendungen in Form eines Lochpaneels verdeckt und für das menschliche Auge sozusagen unsichtbar angeordnet, wobei die genannten Lochpaneele eine Wand- oder Deckenverkleidung bilden können, bspw. nach Art einer abgehängten Gebäudedecke. Um das von den Leuchtmitteln abgegebene Licht durch die relativ kleinen Lichtdurchtrittsöffnungen in der Verblendung hindurch abstrahlen zu können, werden den Leuchtmitteln Linsen zugeordnet, die das abgegebene Licht einfangen und zu einem grob gesprochen stundenglasförmigen Strahlenbündel formen, das sich von der Lichtaustrittsfläche der Linse weg auf das Lochpaneel zu soweit verjüngt, dass es durch die Lichtdurchtrittsöffnung hindurchpasst, und sich nach Passieren der Lichtdurchtrittsöffnung auf der Vorderseite der Lochplatte wieder aufweitet. Hierdurch können die Lichtdurchtrittsöffnungen sehr klein ausgebildet werden, um den Blick auf die Linsen und Leuchtmittel, die auf der Rückseite der Lochplatte von dieser beabstandet angeordnet sein können, zu verdecken und eine Blendungswirkung durch direktes Hineinblicken in die Leuchtmittel zu vermeiden.

Durch die beengten Raumverhältnisse hinter der Lochplatte - durch eine geringe Beabstandung zur dahinterliegenden Gebäudedecke oder -wand soll wenig Raumhöhe bzw. -volumen verloren gehen - und die oft dichte Rasteranordnung mehrerer Lichtdurchtrittsöffnungen für eine gleichmäßige, großflächige Raumausleuchtung benötigen die Linsen eine gedrungene Form. Da gleichzeitig die Durchmesser der Lichtdurchtrittsöffnungen sehr klein sein sollen, was eine präzise Einschnürung des Strahlenbündels und eine genaue Ausrichtung des Strahlenbündels zum Durchtrittsloch erfordert, sind die genannten Linsen bislang recht empfindlich, was die Positionierung der Leuchtmittel relativ zur Lichteintrittsfläche der Linsen betrifft. Fertigungstoleranzen bei der Montage der Linsen auf die üblicherweise als LED ausgebildeten Leuchtmittel können zu einem ungleichmäßigem, fleckigen Strahlungsfeld mit Hell-Dunkel-Bereichen und Farbverschiebungen und damit zu einer entsprechend ungleichmäßigen Raumausleuchtung führen. Ähnliche Probleme können auch durch Fertigungstoleranzen bei der Linsenfertigung entstehen, die zu Formabweichungen bei der Linse selbst führen können.

Solche Montage- und Fertigungstoleranzen können insbesondere auftreten, wenn an sich handelsübliche LED-Bausteine verwendet werden, die über dem Chip bereits eine kuppelförmige Primärlinse haben oder auch freiliegende oder übergossene LED-Chips sein können und an sich recht kostengünstig sind, jedoch nachträglich auf die als Sekundärlinsen fungierende Linsen zu montieren sind, mittels derer das Licht in der genannten Weise zu einem eingeschnürten Strahlenbündel geformt wird, das durch die Durchtrittslöcher in der Lochplatte hindurchpasst. Mit dem günstigen Preis solcher LED-Bausteine geht zudem oft einher, dass für verschiedene Beleuchtungsaufgaben je nach Anwendungs- und Nutzungszweck sowie wahrnehmungspsychologischen Anforderungen, oder auch nur gemäß jeweiligem Bauherrenwunsch mit verschiedenen LED-Typen verschiedener Hersteller gearbeitet werden muss, bspw. um eine bestimmte Lichtfarbe bzw. Farbtemperatur bei der Raumausleuchtung zu erzielen. Insbesondere können dabei Positioniertoleranzen, die die LED-Chips außermittig zur Zentralachse der Linse bzw. aus dem theoretisch idealen Sollpunkt verschieben, auftreten und die genannten Probleme einer ungleichmäßigen Lichtausbreitung, eines fleckigen Strahlungsfelds mit Hell-Dunkel-Bereichen, sowie Farbverschiebungen verstärken.

Hiervon ausgehend liegt der vorliegenden Erfindung die Aufgabe zugrunde, eine verbesserte Beleuchtungsvorrichtung der eingangs genannten Art zu schaffen, die Nachteile des Standes der Technik vermeidet und letzteren in vorteilhafter Weise weiterbildet. Insbesondere soll eine gleichmäßige Raumausleuchtung mit einer hinsichtlich Herstellung und Montage weniger sensiblen Linsenanordnung erzielt werden, die trotz der schwierigen Einbauumgebung hinter einer Lochplatte mit engen Durchtrittsöffnungen bei gleichmäßiger Raumausleuchtung eine einfache Anpassung der Lichtfarbe bzw. Farbtemperatur an diesbezügliche Wünsche unter Verwendung von Standardleuchtmitteln ermöglicht.

Erfindungsgemäß wird die genannte Aufgabe durch eine Beleuchtungsvorrichtung gemäß Anspruch 1 gelöst. Bevorzugte Ausgestaltungen der Erfindung sind Gegenstand der abhängigen Ansprüche.

Es wird also vorgeschlagen, das durch eine Lichtdurchtrittsöffnung im Lochpaneel hindurchtretende Strahlenbündel nicht mehr nur von einer Lichtquelle her zu erzeugen, sondern das Licht mehrerer Lichtquellen zusammenzuführen und miteinander vermischt durch die Durchtrittsöffnung im Lochpaneel hindurchtreten zu lassen. Um hierbei eine gleichmäßige Durchmischung im Strahlenbündel zu erzielen und eine fleckige Ausleuchtung mit ungleichmäßigen Helligkeiten bzw. lokal abweichenden Farben bzw. Farbtemperaturen zu vermeiden, strahlt die Linse unreflektierte Direktlichtanteile und reflektierte Indirektlichtanteile mit im Wesentlichen vollständiger Überdeckung zueinander ab. Erfindungsgemäß sind einer gemeinsamen Linse mehrere Lichtquellen zugeordnet, deren Licht von der gemeinsamen Linse eingefangen und in Form des genannten Strahlenbündels, das sich von der Linse weg auf das Lochpaneel zu verjüngt, durch eine Lichtdurchtrittsöffnung hindurchtritt und sich vom Lochpaneel weg wieder aufweitet, wobei die genannte Linse derart konturiert ist, dass ein von der Linse unreflektiert abgegebener Direktstrahlenanteil und ein von der Linse reflektiert abgegebener Indirektstrahlenanteil im Wesentlichen gleiche Strahlungswinkel aufweisen und das von der Linse insgesamt abgegebene Strahlenbündel jeweils im Wesentlichen vollständig ausfüllen. Insbesondere kann der genannte Indirektstrahlenanteil, dessen Strahlen an der Linsenmantelfläche reflektiert sein können, auch den Zentralbereich des Strahlenbündels ausfüllen bzw. bestrahlen, sodass der indirekte Strahlenanteil kein zentrales Loch bzw. keine zentrale Aussparung mehr aufweist. Umgekehrt kann der Direktstrahlenanteil, der in der Linse nicht reflektiert wird, auch auf die Randbereiche des Strahlenbündels aufgeweitet werden, um den Direktstrahlenanteil nicht nur im Zentralbereich des Strahlenbündels zu haben. Der Indirektstrahlenanteil als auch der Direktstrahlenanteil der Linse bestrahlen jeweils im Wesentlichen das gesamte Strahlungsfeld, da sie im Wesentlichen gleiche Strahlungsfelder besitzen. Hierdurch kann die Empfindlichkeit gegenüber Fertigungstoleranzen und außermittigen Lichtquellenpositionen signifikant gesenkt werden, ohne die Gleichmäßigkeit der Raumausleuchtung zu beeinträchtigen.

Der zuvor genannte Strahlungswinkel meint dabei den Winkel der Grenzstrahlen des Direktstrahlenanteils zueinander bzw. der Grenzstrahlen des Indirektstrahlenanteils zueinander, wobei die genannte Grenzstrahlen jeweils die am weitesten aufgeweiteten Strahlen sind. Die Grenzstrahlen des Direktstrahlenanteils und die Grenzstrahlen des Indirektstrahlenanteils sind also näherungsweise zueinander parallel.

Um von der vorgegebenen Farbe bzw. Farbtemperatur einer jeweiligen Lichtquelle weniger abhängig zu sein, können die einer gemeinsamen Linse zugeordneten Lichtquellen verschiedene Lichtfarben und/oder verschiedene Farbtemperaturen besitzen. Beispielsweise kann eine Kaltweißlichtquelle mit einer Warmweißlichtquelle kombiniert werden, um ein insgesamt neutralweisses Strahlenbündel zu erzeugen. Alternativ oder zusätzlich können auch warmweisse und neutralweisse bzw. neutralweisse und kaltweisse oder auch warmweisse, neutralweisse und kaltweisse Lichtquellen zusammen einer Linse zugeordnet werden, um gewünschte Weissfarbtemperaturen zu mischen bzw. zu erzeugen. Je nach Beleuchtungsaufgabe und gewünschtem Raumambiente können auch andere Lichtfarben und/oder Weisslicht-Farbtemperaturen miteinander gemischt werden oder Lichtquellen miteinander kombiniert werden, bspw. auch um Defizite einzelner Lichtquellen gegenseitig auszugleichen. Insbesondere können rote, gelbe und blaue Lichtquellen, bspw. in Form eines RGB-Leuchtmittels, und/oder rote, gelbe, blaue und weisse Lichtquellen, bspw. in Form eines RGBW-Leuchtmittels vorgesehen werden. Es können jedoch auch Lichtquellen anderer Farben wie cyan, lime oder orange sowie weitere Farbnuancen in Kombination miteinander oder mit einer oder mehreren der zuvor genannten Lichtfarben vorgesehen sein. Alternativ zu Lichtquellen verschiedener Lichtfarbe und/oder Farbtemperatur können auch mehrere Lichtquellen gleicher Lichtfarbe bzw. gleicher Farbtemperatur Verwendung finden, um bspw. verschiedene Lichtstärken realisieren oder auch den Ausfall einzelner Lichtquellen kompensieren zu können.

In vorteilhafter Weiterbildung der Erfindung kann eine Steuervorrichtung zum variablen Steuern des Verhältnisses der von den verschiedenen Lichtquellen abgegebenen Leistungen zueinander vorgesehen sein, um bei Verwendung von Lichtquellen unterschiedlicher Lichtfarbe bzw. unterschiedlicher Farbtemperatur eine gewünschte Lichtfarbe bzw. Farbtemperatur einstellen zu können und/oder bei Verwendung gleichfarbiger Lichtquellen die Leistung dimmen oder den Ausfall einer Lichtquelle durch Hochfahren einer anderen Lichtquelle ausgleichen zu können. Eine solche Steuervorrichtung kann in einfachster Weise bspw. eine Lichtquelle einschalten und ausschalten, um deren Licht dem Licht der anderen Lichtquelle zuzuschalten. Vorteilhafterweise kann auch ein mehrstufiges Einstellen oder ein stufenloses Dimmen der Leistung bzw. Helligkeit zumindest einer, insbesondere auch aller der mehreren Lichtquellen, die einer Linse zugeordnet sind, von der Steuervorrichtung realisiert werden. Hierdurch kann ein feinstufigeres oder gar stufenloses Verändern der insgesamt abgegebenen Lichtstärke und/oder der abgegebenen Lichtfarbe bzw. Farbtemperatur des Strahlenbündels erzielt werden.

Um eine gezielte Raumausleuchtung bei gleichzeitig hoher Vergleichmäßigung des Lichts im Strahlenbündel zu erreichen, können die vorgenannten Strahlungswinkel des Direktlichtanteils und des Indirektlichtanteils jeweils etwa im Bereich von 2x10° bis 2x 50°, vorzugsweise auch 2x 20° bis 2x 40° gewählt sein, wobei die Linse vorteilhafterweise insbesondere derart konturiert sein kann, dass die genannten Strahlungswinkel etwa jeweils 2 x 35° betragen, d.h. der Direktlichtanteil und der Indirektlichtanteil weiten sich nach Austritt aus der Lochplatte jeweils unter einem Winkel von etwa 70° auf.

Um die gewünschte hohe Vergleichmäßigung der Lichtanteile bei gleichzeitig kompakter Baugröße und damit Verwendbarkeit in der begrenzten Einbauumgebung hinter dem Lochpaneel zu erreichen, kann in Weiterbildung der Erfindung die Linse derart konturiert sein, dass das von der Linse erzeugte Strahlenbündel einen Einschnürungsgrad im Bereich von etwa 1,4 bis 2,5 besitzt, wobei der genannte Einschnürungsgrad das Verhältnis des Strahlenbündeldurchmessers an der Lichtaustrittsfläche der Linse zum minimalen Strahlenbündeldurchmesser, der im Bereich des Durchtritts durch die Lochplatte auftritt, beschreibt. Der genannte Strahlenbündeldurchmesser im Bereich der Lichtaustrittsfläche der Linse kann im Wesentlichen dem maximalen, lichttechnisch wirksamen Linsendurchmesser entsprechen, der Linsenrandbereiche wie Befestigungsflansche und dergleichen außer Acht lässt. Insofern kann der genannte Einschnürungsgrad auch als Verhältnis des maximalen, lichttechnisch wirksamen Linsendurchmessers zum Durchmesser des Strahlenbündels im Bereich von dessen stärkster Einschnürung und/oder im Bereich der Lichtdurchtrittsöffnung der Lochplatte bzw. zum minimalen Durchmesser des genannten Strahlenbündels angesehen werden.

Vorteilhafterweise kann der genannte Einschnürungsgrad im Bereich von 1,6 bis 2,2 liegen.

In vorteilhafter Weiterbildung der Erfindung kann die genannte Linse eine Lichtaustrittsfläche besitzen, die in zumindest zwei Hauptbereiche unterteilt ist, von denen ein erster Hauptbereich der Abstrahlung der Direktstrahlen, also der zuvor von der Linse noch nicht reflektierten Strahlen, und der andere Hauptabschnitt dem Abstrahlen der Indirektstrahlen, also der zuvor bereits reflektierten Strahlen dient. Vorteilhafterweise kann der genannte erste Hauptabschnitt der Lichtaustrittsfläche, über den die Direktstrahlen abgestrahlt werden, innerhalb des zweiten Hauptabschnitts liegen und insbesondere den Zentralbereich der Linse bilden. Die genannten Direktstrahlen können dabei durchaus auch gebrochen oder abgelenkt sein, insbesondere beim Eintritt in die Linse an einer beispielsweise leicht gekrümmten Lichteintrittsfläche und/oder beim Austreten aus der Linse an einer beispielsweise ebenfalls leicht gekrümmten Lichtaustrittsfläche, wobei die genannten Direktstrahlen insbesondere die durch den zentralen Linsenbereich hindurchgehenden Strahlen sein können, die vom zentralen Linseneintrittsflächenabschnitt direkt auf einen zentralen Linsenaustrittsflächenabschnitt gelenkt werden, ohne dass die genannten Direktstrahlen hierbei an der Linsenmantelfläche reflektiert, insbesondere Totalreflektiert worden wären. Im Gegensatz hierzu können die vorgenannten Indirektstrahlen an einem entsprechenden Lichteintrittsflächenabschnitt so weit aufgefächert werden, dass sie auf die Mantelfläche der Linse gelangen und dort reflektiert, insbesondere totalreflektiert werden, bevor sie, ggf. ein weiteres Mal an einer gegenüberliegenden Mantelfläche reflektiert, auf die Lichtaustrittsfläche treffen, und zwar insbesondere auf einen anderen Lichtaustrittsflächenabschnitt als die zuvor genannten Direktstrahlen.

In Weiterbildung der Erfindung kann der genannte erste Hauptabschnitt zum Abstrahlen der Direktstrahlen eine konvexe Wölbung und/oder eine flache, kuppelförmige Konturierung besitzen. Die genannte konvexe Wölbung des zentralen Hauptabschnitts der Linse kann einen kleineren Krümmungsradius besitzen als der andere Hauptabschnitt der Linse, über den die Indirektstrahlen abgestrahlt werden.

Der genannte zweite Hauptabschnitt der Lichtaustrittsfläche, über den die Indirektstrahlen abgegeben werden, kann eine wulstförmig erhabene Ringfläche bilden, die den zuvor genannten ersten Hauptabschnitt umgibt. Durch die zuvor genannte konvexe oder kuppelförmige Wölbung des ersten Hauptabschnitts können die Direktstrahlen auch in den Randbereich des insgesamt abgegebenen Strahlenbündels aufgeweitet werden und somit das gesamte Strahlenbündel ausfüllen. Durch die wulstförmige, ringförmige Konturierung des zweiten Hauptabschnitts, die nach innen hin zum ersten Hauptabschnitt wieder abfällt, können die Indirektstrahlen auch in den Kernbereich des insgesamt abgegebenen Strahlenbündels verteilt werden, sodass eine insgesamt im Wesentlichen vollständige Überdeckung der Direkt- und Indirektstrahlenanteile erreicht werden kann.

Je nach Konturierung der Mantelfläche und/oder der Lichteintrittsfläche können jedoch auch andere Konturierungen der Lichtaustrittsfläche vorgesehen sein.

Um eine weitere Durchmischung und eine größere Unempfindlichkeit bei der Anordnung der Lichtquellen relativ zur Linse zu erzielen, kann die Linse in vorteilhafter Weiterbildung der Erfindung an zumindest einer Seite oder Oberfläche mit einer Facettierung versehen sein, wobei in vorteilhafter Weiterbildung der Erfindung insbesondere die Lichtaustrittsfläche mit einer solchen Facettierung versehen sein kann. Die genannte Facettierung kann sich hierbei über nur eine, insbesondere aber auch über beide Hauptabschnitte der Lichtaustrittsfläche erstrecken. Eine solche Facettierung kann altenativ oder zusätzlich zur Facettierung der Lichtaustrittsfläche auch an der Lichtentrittsfläche und/oder der Mantelfläche der Linse vorgesehen sein.

Die genannte Facettierung kann dabei aus einer Vielzahl von kleinen Flächenstücken - den Facettenflächen - zusammengesetzt sein, wobei bspw. 25 oder mehr, vorzugsweise auch mehr als 50 oder mehr als 100 solcher Facettenflächen an der Lichtaustrittsfläche bzw. der jeweiligen Linsenoberfläche vorgesehen sein können, wobei die Facetten in mehreren Ringen oder Reihen, bspw. drei, fünf oder mehr Ringen oder Reihen, die jeweils eine Mehrzahl, bspw. sechs, zwölf oder mehr Facetten aufweisen, an der jeweiligen Linsenfläche angeordnet sein können.

Die genannten Facettenflächen können hierbei flache Flächenstücke bilden bzw. im Wesentlichen eben ausgebildet sein. Alternativ können auch konvexe Facettenflächen vorgesehen sein, die bspw. den Abdrücken flacher Linsen oder Kugelabdrücken entsprechen können, sodass eine insgesamt dellige bzw. eingedellte Oberflächenstruktur umfassend eine Vielzahl von kleinen Eindellungen erhalten wird. Mischformen der genannten Facettierungen umfassend flache und/oder konvexe und/oder konkave Facettenflächen können ebenfalls Verwendung finden.

In Weiterbildung der Erfindung kann die Beleuchtungsvorrichtung nicht nur eine Lichtdurchtrittsöffnung, sondern mehrere Lichtdurchtrittsöffnungen in der Lochplatte aufweisen, wobei ggfs. auch mehrere Lochplatten mit jeweils einer oder mehreren Lichtdurchtrittsöffnungen nebeneinander in einer Ebene oder tangential zu einer gemeinsamen Hüllfläche angeordnet sein können. Die Lochplatte(n) kann/können dabei im Wesentlichen eben oder auch ein- oder zweiachsig gekrümmt sein, bspw. um an eine Tonnengewölbedecke, eine Rundbogenwand oder dergleichen angepasst zu sein. Insbesondere kann die zumindest eine Lochplatte eine Vielzahl von Lichtdurchtrittsöffnungen aufweisen, die in einer regelmäßigen reihenförmigen, insbesondere auch matritzenförmigen Anordnung positioniert sein können.

Bei einer solchen verteilten Anordnung mehrerer Lichtdurchtrittsöffnungen können die jeweils mehreren, einer Lichtdurchtrittsöffnung zugeordneten Lichtquellen in Anordnungen vorgesehen werden, die voneinander abweichen, insbesondere zueinander verdreht sind. Die genannte Verdrehung kann dabei insbesondere bzgl. einer auf die Lochplatte senkrecht stehenden Verdrehungachse, insbesondere der jeweils durch die zugehörige Lichtdurchtrittsöffnung hindurchführenden Lochachse erfolgen. Insbesondere können die Lichtquellenanordnungen an zueinander benachbarten Lichtdurchtrittsöffnungen der Lochplatte um jeweils ein bestimmtes Maß zueinander verdreht sein.

Betrachtet man die Lichtdurchtrittsöffnungen jeweils in Richtung ihrer Lochachse - also insbesondere in einer Blickrichtung senkrecht auf die Lochplatte - können an einer ersten Lichtdurchtrittsöffnung zwei Lichtquellen bspw. bei zwölf Uhr und sechs Uhr angeordnet sein, während bei einer zweiten Lichtdurchtrittsöffnung, die benachbart zu der ersten Lichtdurchtrittsöffnung sein kann, zwei Lichtquellen bei drei Uhr und neun Uhr angeordnet sein können. Je nach Anzahl der einer Lichtdurchtrittsöffnung bzw. einer Linse zugeordneten Lichtquellen können selbstverständlich auch andere Verdrehungen vorgesehen werden. Werden bspw. drei Lichtquellen einer Linse zugeordnet, können an einem ersten Loch der Lochplatte Lichtquellen bei zwölf Uhr, vier Uhr und acht Uhr angeordnet sein. An einem zweiten Durchtrittsloch können Lichtquellen wiederum bei zwölf Uhr, vier Uhr und acht Uhr angeordnet sein, jedoch in einer anderen Aufteilung als am ersten Lichtdurchtrittsloch. Ist bspw. am ersten Lichtdurchtrittsloch bei zwölf Uhr eine blaue Lichtquelle, bei vier Uhr eine gelbe Lichtquelle und bei acht Uhr eine weiße Lichtquelle, kann am zweiten Lichtdurchtrittsloch die weiße Lichtquelle bei zwölf Uhr, die blaue Lichtquelle bei vier Uhr und die gelbe Lichtquelle bei acht Uhr positioniert sein. An einem dritten Lichtdurchtrittsloch kann dann die gelbe Lichtquelle bei zwölf Uhr, die weiße Lichtquelle bei vier Uhr und die blaue Lichtquelle bei acht Uhr angeordnet sein.

Alternativ oder zusätzlich zu einer solchen Verdrehung von einander an sich entsprechenden Anordnungen können an benachbarten Durchtrittsöffnungen auch voneinander abweichende Lichtquellen-Anordnungen vorgesehen sein, bspw. eine Dreilichtquellenanordnung neben einer Zweilicht- oder Vierlichtquellenanordnung oder eine Lichtquellenanordnung mit 2 Weiß- und 2 Gelblichtquellen neben einer Lichtquellenanordnung mit 1 Weiß- und 3 Gelblichtquellen.

Durch eine solche zueinander verdrehte Anordnung der Lichtquellen nach dem Revolver-Prinzip und/oder durch voneinander in Anzahl oder Farbe der Lichtquelle abweichende Anordnungen von Lichtquellen kann eine insgesamt noch weiter verbesserte Vergleichmäßigung der Raumbeleuchtung erzielt werden, insbesondere wenn die eine Vielzahl von Lichtdurchtrittlöcher vorgesehen sind, bspw. zumindest vier, sechzehn, sechsunddreissig oder mehr Lichtdurchtrittslöcher in einer an sich regelmäßigen Matrixanordnung, die ein- oder mehrreihig sowie ein- oder mehrspaltig sein kann.

Grundsätzlich kann jedoch auch eine Einzelpunktanordnung vorgesehen sein, bei der das Lochpaneel der Beleuchtungsvorrichtung lediglich ein Lichtdurchtrittsloch aufweist. Eine solche Einzelpunktanordnung kann beispielsweise als Downlight dienen bzw. kann die Beleuchtungsvorrichtung als Einzelspot-Downlight ausgebildet sein. Hierbei können der Linse ebenfalls mehrere Lichtquellen zugeordnet sein, die verschiedenfarbig ausgebildet oder auch gleichfarbig sein können, um die gewünschte Lichtfarbe bzw. die gewünschte Weisslicht-Farbtemperatur zu mischen, durch Ein- und Ausschalten einzelner Farben die Lichtfarbe bzw. Farbtemperatur umzuschalten oder bei Gleichfarbigkeit die Helligkeit wählen oder auch einen Ausfall einer einzelnen Lichtquelle kompensieren zu können.

Die einer gemeinsamen Linse zugeordneten mehreren Lichtquellen insbesondere in Form von mehreren LEDs können hierbei grundsätzlich verschieden ausgebildet sein. Beispielsweise können die mehreren Lichtquellen von tatsächlich separaten, voneinander getrennten und ggf. individuelle Versorgungseinrichtungen aufweisenden LED-Bausteinen gebildet sein, die jeweils einzeln einen vollständig funktionsfähigen LED-Baustein bilden. Alternativ hierzu können die mehreren Lichtquellen, die einer Linse zugeordnet sind, auch ein Lichtquellenpaket im Sinne einer vormontierten bzw. vorgefertigten Lichtquellenbaugruppe bilden. Insbesondere kann eine Multichip-LED-Baugruppe Verwendung finden, bei der auf einem gemeinsamen Träger, beispielsweise einer gemeinsamen Versorgungsplatte, mehrere LED-Chips angebracht sind, die eine gemeinsame LED-Baugruppe bilden, wobei die genannten, einzelnen LED-Chips gleichfarbig oder verschiedenfarbig ausgebildet sein können.

Alternativ oder zusätzlich kann die Linse auf ihrer Lichteintrittsseite unterschiedlich geformte Grenzflächen aufweisen. In Weiterbildung der Erfindung besitzt die Linse in einem zentralen Lichteintrittsbereich einen zur Leuchte hin konvex gekrümmten Grenzflächenabschnitt, der das zentral abgegebene Licht einfängt und zumindest näherungsweise parallel auf die Lichtaustrittsfläche der Linse richtet. Zum Einfangen des mehr seitlich abgegebenen Lichtstroms kann die Linse weiterhin eine vorzugsweise kegel- oder trichterartig geformte äußere Lichteintrittsfläche aufweisen, die das Licht auf eine seitliche Außenkontur bzw. die Mantelfläche der Linse richtet. Die besagte Außenkontur bzw. die Mantelfläche der Linse ist vorteilhafterweise reflektierend, insbesondere total reflektierend ausgebildet, so dass der Lichtstrom in den Linsenkörper zurück reflektiert wird. Vorteilhafterweise ist die total reflektierende Außenkontur derart geformt, dass der Lichtstrom auf die Lichtaustrittsseite der Linse gelenkt wird, insbesondere auf den vorgenannten äußeren, konvex geformten Grenzflächenbereich der Lichtaustrittsseite der Linse.

Je nach verwendetem Leuchtmittel kann die Linse verschiedene geometrische Abmessungen besitzen. Bei Verwendung einer an sich üblichen LED kann die Linse einen Maximaldurchmesser von 10 bis 25 mm, vorzugsweise im Bereich von 14 bis 20 mm, aufweisen. Der Maximaldurchmesser liegt dabei vorteilhafterweise im Bereich der Lichtaustrittsseite der Linse und kann insbesondere etwa 16-17 mm betragen.

Vorteilhafterweise ist die Linse sehr kurzbauend ausgebildet. Sie kann eine Länge im Bereich von 10 bis 20 mm, vorzugsweise 12 bis 15 mm, aufweisen.

Um eine einfache Montage zu ermöglichen, können die Leuchten bzw. die Linsen mit dem Paneel zu einer Montagebaugruppe verbunden sein. Alternativ können die Leuchtmittel und die Linsen jedoch auch unabhängig von dem Lochpaneel an der Wand bzw. Decke oder einem weiteren Träger montiert sein. Dies kann insbesondere dann vorteilhaft sein, wenn die Leuchtmittel einerseits und die Lichtdurchtrittsöffnungen andererseits in miteinander deckungsgleichen, insbesondere regelmäßigen Rastern angeordnet sind, so dass ein deckungsgleiches Aufsetzen des Paneels in einfacher Weise ermöglicht wird.

In vorteilhafter Weiterbildung der Erfindung können die Leuchten mit den Linsen auf einem Leuchtenträger vorzugsweise in Form einer Platine befestigt sein. Die besagte Platine kann die Steuerungs- und/oder Leistungselektronik zur Ansteuerung und zum Betreiben der Leuchten aufweisen.

Die Erfindung wird nachfolgend anhand bevorzugter Ausführungsbeispiele und zugehöriger Zeichnungen näher erläutert. In den Zeichnungen zeigen:
- Fig. 1:: eine Schnittansicht einer Beleuchtungsvorrichtung nach einer vorteilhaften Ausführung der Erfindung, wobei in einer Teilansicht nur eine Lichtdurchtrittsöffnung der Lochplatte und die dieser Durchtrittsöffnung zugeordnete Linse dargestellt ist, wobei die Indirekt- und Direktstrahlenanteile und deren Verlauf in der Linse und im abgegebenen Strahlenbündel dargestellt sind,
- Fig. 2:: eine Schnittansicht der Linse aus Fig. 1, die ohne Strahlengänge die Konturierung der Linse verdeutlicht,
- Fig. 3:: eine perspektivische Explosionsdarstellung der Komponenten der Beleuchtungsvorrichtung aus den vorhergehenden Figuren,
- Fig. 4:: eine perspektivische Frontansicht der Lichtaustrittsfläche der Linse aus den vorhergehenden Figuren, die die Facettierung der beiden Hauptabschnitte der Lichtaustrittsfläche zeigt,
- Fig. 5:: eine schematische Draufsicht auf eine Lochplatte mit matritzenförmig angeordneten Lichtdurchtrittsausnehmungen, die die zueinander verdrehte Anordnung der Lichtquellen bei einer Zweilichtquellenanordnung zeigt,
- Fig. 6:: eine schematische Draufsicht auf die Beleuchtungsvorrichtung ähnlich Fig. 5, die die zueinander verdrehte Anordnung der Lichtquellen an verschiedenen Lichtdurchtrittsöffnungen bei einer Vierlichtquellenanordnungen zeigt.

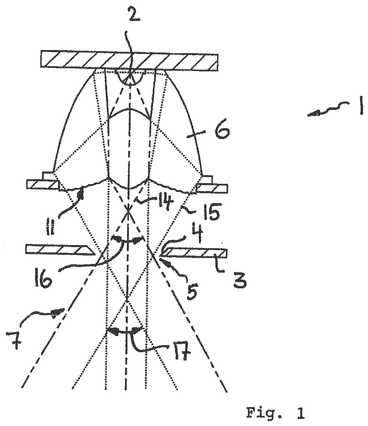

Die in Figur 1 schematisch gezeichnete Beleuchtungsvorrichtung 1 umfasst eine Vielzahl von Lichtquellen- oder Leuchtmittelgruppen 2 vorteilhafterweise in Form von LEDs, die jeweils - als Gruppe zusammengefaßt - mehrere Lichtquellen umfassen und vorzugsweise in einem regelmäßigen Raster voneinander beabstandet angeordnet sind. In Figur 1 ist indes nur eine Leuchtmittelgruppe 2 gezeigt, deren Licht vollständig in einen gemäß Figur 1 nach unten gerichteten Halbraum abgestrahlt wird.

Den Lichtquellen bzw. Leuchtmitteln 2 zugeordnet ist ein Lochpaneel 3, das vorteilhafterweise in Form eines Wand- und/oder Deckenverkleidungspaneels ausgebildet ist und nach Art einer vorgeblendeten Wandverkleidung bzw. einer abgehängten Deckenverkleidung montiert werden kann. Das Lochpaneel 3 kann dabei in Form einer ebenen Platte, beispielsweise einer Holzplatte aber auch einer Verbundbauplatte, ausgebildet sein.

Das Lochpaneel 3 weist dabei Lichtdurchtrittsöffnungen 4 auf, die den Lichtquellen- bzw. Leuchtmittelgruppen 2 zugeordnet sind und in einem der Anordnung der Leuchtmittel 2 entsprechenden Raster angeordnet sind. Bei Ausbildung als Einzelleuchte kann das Lochpaneel 3 alternativ jedoch auch nur eine Lichtdurchtrittsöffnung 4 aufweisen, beispielsweise wenn die Beleuchtungsvorrichtung als Einzel-Downlight oder Einzelstrahler verwendet werden soll.

Wie Figur 1 zeigt, sind die Leuchtmittel 2 auf der nicht sichtbaren Rückseite des Lochpaneels 3 von den Lichtdurchtrittsöffnungen 4 deutlich beabstandet. Zwischen der in Figur 1 gezeichneten Leuchtmittelgruppe 2, die zwei Leuchtmittel 2 in Form zweier LEDs umfaßt, und dem Lochpaneel 3 bzw. dessen Lichtdurchtrittsöffnung 4 ist gemäß Figur 1 eine Linse 6 angeordnet, die das von den Leuchtmitteln 2 in den Halbraum abgestrahlte Licht bündelt und durch die an sich zu kleine Lichtdurchtrittsöffnung 4 hindurchleitet. Insbesondere nimmt die Linse 6 den von der Leuchtmittelgruppe 2 abgegebenen Lichtstrom zumindest im Wesendlichen vollständig auf und gibt ihn vollständig wieder ab, insbesondere bündelt die Linse 6 den von den Leuchtmitteln 2 abgegebenen Lichtstrom mit Hilfe einer Einschnürung 5 des Lichtstrahlenbündels 7 durch die Lichtdurchtrittsöffnung 4 des Paneels 3 hindurch, vgl. Figur 1.

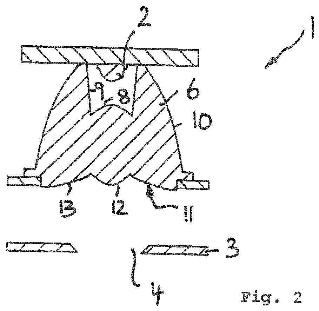

Die Linse 6 besitzt dabei vorteilhafterweise die in den Figuren gezeigte Form. Auf der Lichteintrittsseite besitzt die Linse 6 eine - grob gesprochen - sackloch- bzw. senkenförmige Lichteintrittsausnehmung, mit der die Linse 6 über die Leuchtmittel 2 gestülpt ist bzw. auf diese aufgesetzt ist, vgl. Figur 2. Die genannte Lichteintrittsausnehmung umfasst dabei in einem zentralen, stirnseitigen Bereich eine zu den Leuchtmitteln 2 hin konvex gewölbte Eintrittsgrenzfläche 8, die den zentral nach oben abgestrahlten Lichtanteil einfängt und im Linsenkörper zunächst parallel nach oben richtet. Die Grenzfläche wird hierbei durch den Übergang von einem ersten Medium, beispielsweise Luft mit einem Brechungsindex von 1,0, in ein zweites Medium mit einem hiervon verschiedenen Brechungsindex, beispielsweise PMMA mit einem Brechungsindex von ca. 1,5, gebildet. Seitlich wird der vorgenannte Lichteintrittsraum von einer kegel- bzw. trichterförmigen Grenzfläche 9 begrenzt, die sich mit im Schnitt betrachtet geneigten und/oder gewölbten Flanken zum Leuchtmittel hin erweitert und die mehr seitlich abgegebenen Lichtstrahlen bricht und auf die Außenseite 10 bzw. Mantelfläche der Linse 6 richtet, vgl. Figur 1 und 2.

Die besagte Außen- bzw. Mantelfläche 10 ist hierbei vorteilhafterweise total reflektierend und/oder auch verspiegelt ausgebildet, so dass die auf die Außenseite 10 gelangenden Lichtstrahlen reflektiert werden, und zwar zu der Lichtaustrittsseite 11 der Linse 6.

Die besagte Lichtaustrittsseite 11 der Linse 6 ist dabei im wesentlichen in zwei unterschiedlich geformte Grenzflächenabschnitte untergliedert. Eine erste, zentrale Grenzfläche 12, die den eingangs genannten ersten Hauptabschnitt der Lichtaustrittsseite bildet, ist konvex oder kuppelförmig gewölbt. Auf diese zentrale Grenzfläche 12 gelangen die Lichtstrahlen, die über die zentrale Eintrittsgrenzfläche 8 in den Linsenkörper eingetreten und im wesentlichen parallel gerichtet gemäß Figur 2 nach unten gestrahlt wurden. Die genannte zentrale, leicht konvexe Grenzfläche 12 wird auf der Lichtaustrittsseite 11 von einer ringwulstförmigen, konvexen zweiten Grenzfläche 13 ergänzt, die die von der Außenseite 10 der Linse 6 her kommenden Lichtstrahlen ablenkt und den eingangs genannten zweiten Hauptabschnitt der Lichtaustrittsfläche 11 bildet.

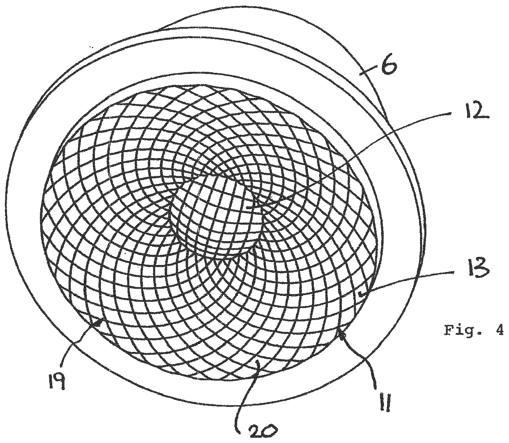

Die Lichtaustrittsfläche kann dabei, wie Fig. 4 zeigt, mit einer Facettierung 19 versehen sein, die sich über die ersten und zweiten Hauptabschnitte hinweg erstrecken kann bzw. in jedem dieser Abschnitte oder auch nur in einem dieser Abschnitte ausgebildet sein kann. Die genannte Facettierung 19 kann dabei aus einer Vielzahl von kleinen Flächenstücken - den Facettenflächen 20 - zusammengesetzt sein, wobei bspw. mehr als 100 solcher Facettenflächen 20 an der Lichtaustrittsfläche 11 vorgesehen sein können, wobei die Facetten in einer Vielzahl von spiralförmigen Ringen bzw. Reihen, die jeweils eine Vielzahl von Facetten 20 aufweisen, an der jeweiligen Lichtaustrittsfläche 11 angeordnet sein können.

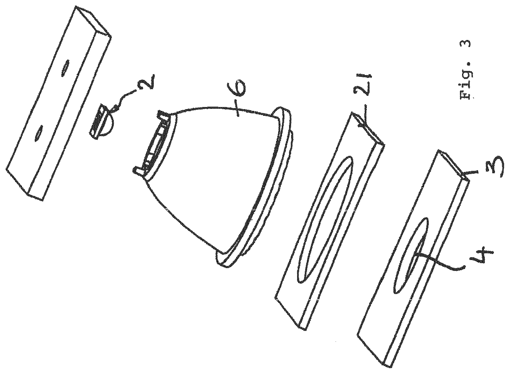

Wie Fig. 3 zeigt, können die Leuchtmittel 2 und die Linsen 6 mit dem Lochpaneel 3 zu einer Montagebaugruppe verbunden sein. Alternativ können die Leuchtmittel 2und die Linsen 6 jedoch auch unabhängig von dem Lochpaneel 3 an der Wand bzw. Decke oder einem weiteren Träger 21 montiert sein, der dann an der Wand bzw. Decke montiert und/oder mit dem Lochpaneel 3 zu einer Montagebaugruppe zusammengefaßt sein kann.

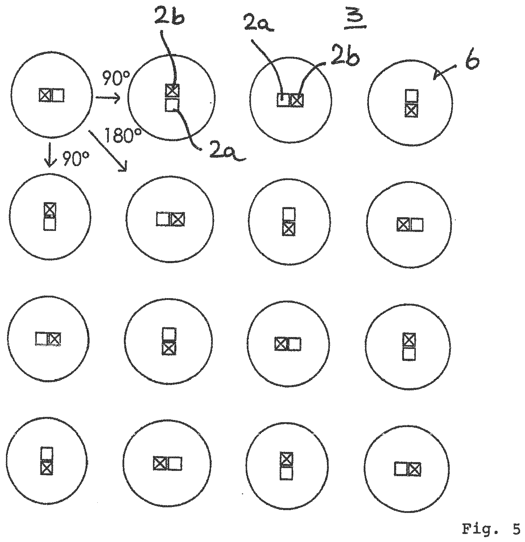

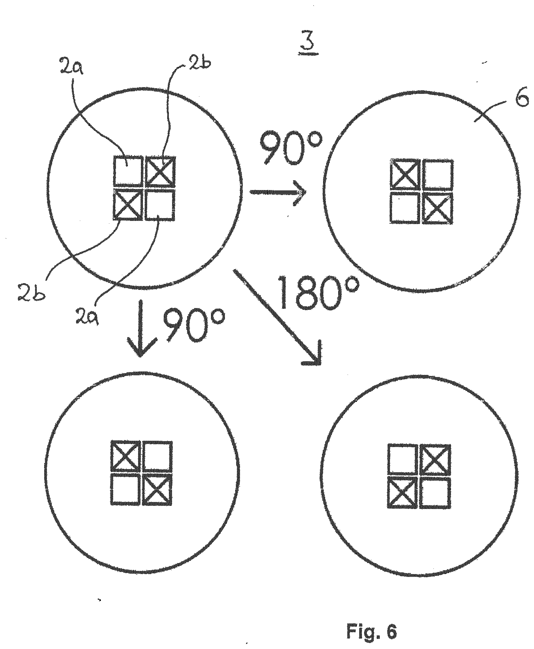

Wie die Fig. 5 und 6 am besten zeigten, wird das durch eine jeweilige Lichtdurchtrittsöffnung 4 im Lochpaneel 3 hindurchtretende Strahlenbündel 7 nicht mehr nur von einer Lichtquelle her erzeugt, sondern das Licht mehrerer Lichtquellen 2a und 2b, die jewelgs zu einer Lichtquellengruppe 2 zusammengefaßt und einer gemeinsamen Linse 6 zugeordnet sind, zusammengeführt und miteinander vermischt durch die Durchtrittsöffnung 4 im Lochpaneel 3 hindurchgelassen. Um hierbei eine gleichmäßige Durchmischung im Strahlenbündel zu erzielen und eine fleckige Ausleuchtung mit ungleichmäßigen Helligkeiten bzw. lokal abweichenden Lichtfarben bzw. Farbtemperaturen zu vermeiden, strahlt die Linse 6, wie dies Fig. 1 zeigt, unreflektierte Direktlichtanteile 14 und reflektierte Indirektlichtanteile 15 mit im Wesentlichen vollständiger Überdeckung zueinander ab. Dabei sind der gemeinsamen Linse 6 mehrere Lichtquellen 2a und 2b in Form von vorzugsweise verschiedenfarbigen LEDs zugeordnet, deren Licht von der gemeinsamen Linse 6 eingefangen und in Form des genannten Strahlenbündels 7, das sich von der Linse 6weg auf das Lochpaneel 3 zu verjüngt, durch die Lichtdurchtrittsöffnung 4 hindurchtritt und sich vom Lochpaneel 3 weg wieder aufweitet. Die genannten LEDs können in einer gemeinsamen Ebene senkrecht zur Hauptachse der Linse 6 nebeneinander angeordnet oder auch in verschiedene Ebenen bzw. in Achsrichtung leicht versetzt angeordnet sein, wobei die LEDs insbesondere in der zuvor genannten Lichteintrittsausnehmung der Linse 6 aufgenommen sein können. Dabei ist die genannte Linse 6 derart konturiert, dass ein von der Linse 6 unreflektiert abgegebener Direktstrahlenanteil 14 und ein von der Linse 6 reflektiert abgegebener Indirektstrahlenanteil 15 im Wesentlichen gleiche Strahlungswinkel 16 und 17 aufweisen und das von der Linse insgesamt abgegebene Strahlenbündel jeweils im Wesentlichen vollständig ausfüllen, vgl. Fig. 1. Insbesondere kann der genannte Indirektstrahlenanteil 15, dessen Strahlen an der Linsenmantelfläche 10 reflektiert werden, auch den Zentralbereich des Strahlenbündels ausfüllen bzw. bestrahlen, sodass der indirekte Strahlenanteil 15 kein zentrales Loch bzw. keine zentrale Aussparung mehr aufweist. Umgekehrt kann der Direktstrahlenanteil 14, der in der Linse 6 nicht reflektiert wird, auch auf die Randbereiche des Strahlenbündels 7 aufgeweitet werden, um den Direktstrahlenanteil 14 nicht nur im Zentralbereich des Strahlenbündels zu haben.

Die genannten Strahlungswinkel können zumindest näherungsweise 2 x 35° betragen, vgl. Fig. 1.

Wie Fig. 1 zeigt, kann die Linse 6 derart konturiert sein, dass das von der Linse 6 erzeugte Strahlenbündel 7 einen Einschnürungsgrad im Bereich von etwa 1,4 bis 2,5 besitzt, wobei der genannte Einschnürungsgrad das Verhältnis des Strahlenbündeldurchmessers D an der Lichtaustrittsfläche 11 der Linse 6 zum minimalen Strahlenbündeldurchmesser d, der im Bereich des Durchtritts durch die Lochplatte 3 auftritt, beschreibt. Der genannte Strahlenbündeldurchmesser D im Bereich der Lichtaustrittsfläche der Linse kann im Wesentlichen dem maximalen, lichttechnisch wirksamen Linsendurchmesser entsprechen, der Linsenrandbereiche wie Befestigungsflansche und dergleichen außer Acht lässt. Vorteilhafterweise kann der genannte Einschnürungsgrad im Bereich von 1,9 bis 2,1 liegen.

Wie die Fig. 5 und 6 zeigen, sind die die jeweils mehreren, einer Lichtdurchtrittsöffnung zugeordneten Lichtquellen in Anordnungen vorgesehen, die voneinander abweichen, insbesondere zueinander verdreht sind, wenn man nebeneinander liegende oder allgemein verschiedene Lichtdurchtrittslöcher 4 betrachtet bzw. miteinander vergleicht. Die genannte Verdrehung kann dabei insbesondere bzgl. einer auf die Lochplatte 3 senkrecht stehenden Verdrehungachse, insbesondere der jeweils durch die zugehörige Lichtdurchtrittsöffnung 4 hindurchführenden Lochachse erfolgen. Insbesondere können die Lichtquellenanordnungen an zueinander benachbarten Lichtdurchtrittsöffnungen 4 der Lochplatte 3 um jeweils ein bestimmtes Maß zueinander verdreht sein.

Je nach Anzahl von Lichtquellen 2, die in einer Lichtquellengruppe 2 zusammengefaßt (und einer gemeinsamen Linse 6 zugeordnet sind), können verschiedene Verdrehungen bzw. Verdrehwinkel sinnvoll sein.

Wie Fig. 5 zeigt, kann bei einer Zweilichtquellenanordnung mit zwei Lichtquellen 2a und 2b - insbesondere in Form der vorgenannten LEDs - pro Lichtdurchtrittsöffnung 4 ein Verdrehwinkel von jeweils 90° zwischen zwei benachbarten Lichtdurchtrittsöffnungen einer Reihe von Lichtdurchtrittsöffnungen 4 und/oder ein Verdrehwinkel von 90° zwischen zwei benachbarten Lichtdurchtrittsöffnungen einer Spalte von Lichtdurchtrittsöffnungen 4 vorgesehen werden, wobei eine ein- oder mehrreihige und/oder eine ein- oder mehrspaltige Matrixanordnung vorgesehen sein kann. Die genannten Lichtquellen 2a und 2b einer Lichtquellengruppe können dabei verschiedenfarbige Lichtquellen - bspw. kaltweisse und warmweisse LEDs sein. Wie Fig. 5 verdeutlicht kann eine solche 90° Verdrehung zwischen zwei benachbarten Lichtquellengruppen 2 insbesondere bei einer Matrizenanordnung von zumindest 4 x 4 Lichtdurchtrittslöchern sinnvoll sein, da dann in jeder Reihe und jeder Spalte jeweils eine volle Verdrehung von 4 x 90° und damit eine insgesamt vollsymmetrische bzw. bestmögliche Überdeckung der Lichtstrahlenbündel 7 bzw. ein guter gegenseitiger Ausgleich möglicher, verbleibender Unregelmäßigkeiten in den Lichtverteilungen der Strahlenbündel 7 aus verschiedenen Durchtrittslöchern 4 erzielt wird. Wie Fig. 5 zeigt, kann dabei bei einer mehrreihigen bzw. mehrspaltigen Matrix entlang einer Diagonalen ein Verdrehwinkel von 180° sinnvoll sein, um eine bestmögliche Vergleichmäßigung zu erzielen. Anders als in Fig. 5 dargestellt, kann es dabei insbesondere auch vorteilhaft sein, wenn entlang beider Diagonalrichtungen - also von links oben nach rechts unten sowie von links unten nach rechts oben - jeweils eine solche 180°-Verdrehung vorgesehen ist.

Bei einer Vierlichtquellenanordnung mit vier Lichtquellen 2a und 2b in zweifacher, paarweiser Gruppierung, vgl. Fig. 6, pro Lichtdurchtrittsöffnung 4 kann ein Verdrehungswinkel von 90° zwischen zwei benachbarten Lichtdurchtrittsöffnungen (4) einer Reihe von Lichtdurchtrittsöffnungen und/oder ein Verdrehwinkel von 90° zwischen zwei benachbarten Lichtdurchtrittsöffnungen einer Spalte von Lichtdurchtrittsöffnungen 4 und/oder ein Verdrehungswinkel von 180° zwischen zwei Lichtdurchtrittsöffnungen 4 einer Diagonalen von Lichtdurchtrittsöffnungen 4 oder vorzugsweise entlang beider Diagonalrichtungen vorgesehen sein, vgl. Fig. 6. Dies kann insbesondere bei einer Matrixanordnung von zumindest 2 x 2 Durchtrittsöffnungen 4, denen jeweils die genannte Doppelgruppe von 2 x 2 Lichtquellen 2a und 2b bzw. eine Vierlichtquellenanordnung zugeordnet ist.

## Patentansprüche

1. Beleuchtungsvorrichtung, insbesondere in Form von Deckenstrahlern, mit einem Lochpaneel (3) mit zumindest einer Lichtdurchtrittsöffnung (4) sowie einer hinter dem Lochpaneel (3) verblendet angeordneten Linse (6) zum Abgeben eines Lichtstrahlenbündels (7), das sich von der Linse (6) weg auf das Lochpaneel (3) zu verjüngt, durch die Lichtdurchtrittsöffnung (4) hindurchtritt und sich vom Lochpaneel (3) weg wieder aufweitet, **dadurch gekennzeichnet, dass** der Linse (6) mehrere Lichtquellen (2) zugeordnet sind, deren Licht von der gemeinsamen Linse (6) eingefangen und in Form des genannten Strahlenbündels (7) abgegeben wird, wobei die Linse (6) derart konturiert ist, dass ein von der Linse (6) unreflektiert abgegebener Direktstrahlenanteil (14) und ein von der Linse (6) reflektiert abgegebener Indirektstrahlenanteil (15) im Wesentlichen gleiche Strahlungswinkel (16,17) aufweisen und das von der Linse (6) insgesamt abgegebene Strahlenbündel (7) jeweils im Wesentlichen vollständig ausfüllen.

2. Beleuchtungsvorrichtung nach dem vorhergehenden Anspruch, wobei die mehreren Lichtquellen (2), die einer gemeinsamen Linse (6) zugeordnet sind, verschiedene Lichtfarben und/oder verschiedene Farbtemperaturen besitzen.

3. Beleuchtungsvorrichtung nach dem vorhergehenden Anspruch, wobei die mehreren Lichtquellen (2), die einer gemeinsamen Linse (6) zugeordnet sind, rot, grün, blau und/oder weiß, insbesondere als RGB-Leuchtmittel oder RGBW-Leuchtmittel ausgebildet sind.

4. Beleuchtungsvorrichtung nach Anspruch 2 oder 3, wobei die mehreren Lichtquellen (2), die einer gemeinsamen Linse (6) zugeordnet sind, zumindest zwei verschiedene Weißfarbtemperaturen, insbesondere Warmweiß-, Kaltweiß-und/oder Neutralweiß-Leuchtmittel umfassen.

5. Beleuchtungsvorrichtung nach einem der vorhergehenden Ansprüche, wobei eine Steuervorrichtung (18) zum variablen Steuern des Leistungsverhältnis der mehreren, einer gemeinsamen Linse (6) zugeordneten Lichtquellen (2) und damit variablen Steuern der Lichtfarbe und/oder der Helligkeit des von der Linse (6) insgesamt abgegebenen Strahlenbündels (7) vorgesehen ist.

6. Beleuchtungsvorrichtung nach einem der vorhergehenden Ansprüche, wobei die Strahlungswinkel (16,17) der Direkt- und Indirektstrahlenanteile (14,15) des Strahlenbündels (7) jeweils etwa 2x 10° bis 2x 50°, vorzugsweise etwa 2x 35°, betragen.

7. Beleuchtungsvorrichtung nach einem der vorhergehenden Ansprüche, wobei die Linse (6) einen Einschnürungsgrad von etwa 1,4 bis 2,5 besitzt, wobei der genannte Einschnürungsgrad das Verhältnis des Strahlenbündeldurchmessers an der Lichtaustrittsfläche der Linse (6) zu dem minimalen Strahlenbündeldurchmesser im Bereich der Lichtdurchtrittsöffnung (4) der Lochplatte (3) wiedergibt.

8. Beleuchtungsvorrichtung nach einem der vorhergehenden Ansprüche, wobei mehrere Lichtdurchtrittsöffnungen (4) in einer vorzugsweise regelmäßigen, insbesondere matrixartigen oder reihenartigen, Anordnung voneinander beabstandet vorgesehen sind, wobei den genannten Lichtdurchtrittsöffnungen (4) jeweils eine Linse (6) zugeordnet ist, denen wiederum jeweils mehrere Lichtquellen (2) zugeordnet sind, wobei die Lichtquellen (2) an einer ersten Lichtdurchtrittsöffnung (4) in einer anderen Anordnung als die Lichtquellen an einer zweiten Lichtdurchtrittsöffnung (4) positioniert sind.

9. Beleuchtungsvorrichtung nach dem vorhergehenden Anspruch, wobei die Lichtquellenanordnungen an zueinander benachbarten Lichtdurchtrittsöffnungen (4) zueinander verdreht sind.

10. Beleuchtungsvorrichtung nach dem vorhergehenden Anspruch, wobei die Verdrehung der Lichtquellenanordnung jeweils bzgl. einer durch die Lichtdurchtrittsöffnung (4) hindurchgehenden Lochachse vorgesehen ist.

11. Beleuchtungsvorrichtung nach einem der beiden vorhergehenden Ansprüche, wobei die Lichtquellenanordnungen von Lichtdurchtrittsöffnung zu Lichtdurchtrittsöffnung um jeweils einen vorbestimmten Winkel verdreht sind.

12. Beleuchtungsvorrichtung nach dem vorhergehenden Anspruch, wobei bei einer Zweilichtquellenanordnung mit zwei Lichtquellen (2) pro Lichtdurchtrittsöffnung (4) und/oder bei einer Vierlichtquellenanordnung mit vier Lichtquellen (2) pro Lichtdurchtrittsöffnung (4) ein Verdrehwinkel von 90° zwischen zwei benachbarten Lichtdurchtrittsöffnungen einer Reihe oder Spalte von Lichtdurchtrittsöffnungen (4) und ein Verdrehungswinkel von 180° zwischen zwei Lichtdurchtrittsöffnungen (4) einer Diagonalen von Lichtdurchtrittsöffnungen (4) vorgesehen ist.

## Claims

1. A lighting apparatus, in particular in the form of ceiling spots, with a perforated panel (3) having at least one aperture for light to pass through (4), as well as a lens (6) arranged so as to be concealed behind the perforated panel (3) for emitting a bundle of light beams (7) that narrows on its way from the lens (6) to the perforated panel (3), passes through the aperture for light to pass through (4), and broadens again after leaving the perforated panel (3), **characterized in that** a plurality of light sources (2) are allocated to the lens (6), the light from which light sources is captured by a common lens (6) and emitted in the form of the bundle of light beams (7), wherein the lens (6) is shaped in such a manner that a direct beam portion (14) emitted without reflection from the lens (6) and an indirect beam portion (15) emitted with reflection from the lens (6) have essentially identical beam angles (16, 17), and each essentially completely make up the overall bundle of light beams (7) emitted by the lens (6).

2. The lighting apparatus according to the preceding claim, wherein the plurality of light sources (2) allocated to a common lens (6) have different luminous colors and/or different color temperatures.

3. The lighting apparatus according to the preceding claim, wherein the plurality of light sources (2) allocated to a common lens (6) are embodied as red, green, blue, and/or white, in particular as RGB or RGBW lighting means.

4. The lighting apparatus according to claim 2 or 3, wherein the plurality of light sources (2) allocated to a common lens (6) include at least two different white color temperatures, in particular warm white, cold white, and/or neutral white lighting means.

5. The lighting apparatus according to one of the preceding claims, wherein a control apparatus (18) is provided for variably controlling the output ratio of the plurality of light sources (2) allocated to a common lens (6), and thus variably controlling the luminous color and/or brightness of the total bundle of light beams (7) emitted from the lens (6).

6. The lighting apparatus according to one of the preceding claims, wherein the beam angles (16,17) of the direct and indirect light portions (14, 15) of the bundle of light beams (7) are in each case approximately 2x 10° to 2x 50°, preferably approximately 2x 35°.

7. The lighting apparatus according to one of the preceding claims, wherein the lens (6) has a necking degree of approximately 1.4 to 2.5, wherein this necking degree reflects the ratio of the diameter of the bundle of light beams at the light emitting surface of the lens (6) to the minimum diameter of the bundle of light beams in the region of the aperture for light to pass through (4) of the perforated panel (3).

8. The lighting apparatus according to one of the preceding claims, wherein a plurality of apertures for light to pass through (4) are provided in a preferably regular, in particular matrix-like or row-like arrangement at a distance to one another, wherein in each case one lens (6) is allocated to the apertures for light to pass through (4), to each of which in turn a plurality of light sources (2) are allocated, wherein the light sources (2) at a first aperture for light to pass through (4) are positioned in a different arrangement that the light sources at a second aperture for light to pass through (4).

9. The lighting apparatus according to the preceding claim, wherein the arrays of light sources at adjacent apertures for light to pass through (4) are turned toward one another.

10. The lighting apparatus according to the preceding claim, wherein the rotation of the array of light sources is provided in each case with regard to a hole axis passing through the aperture for light to pass through (4).

11. The lighting apparatus according to one of the two preceding claims, wherein the arrays of light sources from aperture for light to pass through to aperture for light to pass through are in each case rotated by a predetermined angle.

12. The lighting apparatus according to the preceding claim, wherein, for an array of two light sources with two light sources (2) per aperture for light to pass through (4) and/or, for an array of four light sources with four light sources (2) per aperture for light to pass through (4), an angle of rotation of 90° between two adjacent apertures for light to pass through of a row or column of apertures for light to pass through (4) and an angle of rotation of 180° between two apertures for light to pass through (4) of a diagonal line of apertures for light to pass through (4) id provided.

## Revendications

1. Dispositif d'éclairage, notamment sous forme de spots de plafond, comprenant un panneau perforé (3) muni d'au moins une ouverture de passage de lumière (4) ainsi que d'une lentille (6) disposée de manière masquée derrière le panneau perforé (3), destinée à émettre un faisceau de rayons de lumière (7) qui, en s'éloignant de la lentille (6), se rétrécit en direction du panneau perforé (3), traverse l'ouverture de passage de lumière (4) et s'élargit de nouveau en s'éloignant du panneau perforé (3), **caractérisé en ce que** plusieurs sources de lumière (2) sont associées à la lentille (6), dont la lumière est captée par la lentille commune (6) et est émise sous forme du dit faisceau de rayons de lumière (7), la lentille (6) ayant un tel contour qu'une fraction de rayons directs (14) émis par la lentille (6) de manière non réfléchie et qu'une fraction de rayons indirects (15) émis par la lentille (6) de manière réfléchie présentent essentiellement le même angle de rayonnement (16, 17) et remplissent respectivement essentiellement entièrement le faisceau de rayons (7) émis en tout par la lentille (6).

2. Dispositif d'éclairage selon la revendication précédente, les plusieurs sources de lumière (2) qui sont associées à une lentille commune (6), possédant différentes couleurs de lumière et/ou différentes températures de lumière.

3. Dispositif d'éclairage selon la revendication précédente, les plusieurs sources de lumière (2) qui sont associées à une lentille commune (6) étant réalisées en rouge, vert, bleu et/ou blanc, notamment comme moyens lumineux RVB ou comme moyens lumineux RVBB.

4. Dispositif d'éclairage selon la revendication 2 ou 3, les plusieurs sources de lumière (2) qui sont associées à une lentille commune (6) comprenant au moins deux températures différentes de couleur blanche, notamment des moyens lumineux blanc chaud, blanc froid et/ou blanc neutre.

5. Dispositif d'éclairage selon l'une quelconque des revendications précédentes, un dispositif de commande (18) étant ménagé pour la commande variable du rapport de puissance des plusieurs sources de lumière (2) associées à une lentille commune (6) et donc pour la commande variable de la couleur de la lumière et/ou de la luminosité du faisceau de rayons (7) émis en tout par la lentille (6).

6. Dispositif d'éclairage selon l'une quelconque des revendications précédentes, l'angle de rayonnement (16, 17) des fractions de rayons directs et des fractions de rayons indirects (14, 15) du faisceau de rayons (7) étant de respectivement environ 2x 10° à 2x 50°, de préférence d'environ 2x 35°.

7. Dispositif d'éclairage selon l'une quelconque des revendications précédentes, la lentille (6) possédant un degré d'étranglement d'environ 1,4 à 2,5, ledit degré d'étranglement représentant le rapport entre le diamètre du faisceau de rayons sur la surface de sortie de lumière de la lentille (6) et le diamètre du faisceau de rayons au niveau de l'ouverture de passage de lumière (4) du panneau perforé (3).

8. Dispositif d'éclairage selon l'une quelconque des revendications précédentes, plusieurs ouvertures de passage de lumière (4) étant ménagées de manière espacée les unes des autres dans une disposition de préférence régulière, notamment en forme de matrice ou en rangées, respectivement une lentille (6) étant associée aux dites ouvertures de passage de lumière (4), auxquelles de nouveau respectivement plusieurs sources de lumière (2) sont associées, les sources de lumière (2) situées sur une première ouverture de passage de lumière (4) étant positionnées dans une autre disposition que les sources de lumière situées sur une deuxième ouverture de passage de lumière (4).

9. Dispositif d'éclairage selon la revendication précédente, les dispositions de sources de lumière sur des ouvertures de passage de lumière (4) voisines les unes aux autres étant décalées les unes par rapport aux autres.

10. Dispositif d'éclairage selon la revendication précédente, le décalage de la disposition des sources de lumière étant respectivement ménagé par rapport à un axe de trou traversant l'ouverture de passage de lumière (4).

11. Dispositif d'éclairage selon l'une quelconque des deux revendications précédentes, les dispositions de sources de lumière, d'ouverture de passage de lumière à ouverture de passage de lumière, étant décalées de respectivement un angle prédéterminé.

12. Dispositif d'éclairage selon la revendication précédente, dans lequel, en cas d'une disposition à deux sources de lumière avec deux sources de lumière (2) par ouverture de passage de lumière (4) et/ou en cas d'une disposition à quatre sources de lumière avec quatre sources de lumière (2) par ouverture de passage de lumière (4), un angle de décalage de 90°est ménagé entre deux ouvertures de passage de lumière voisines d'une rangée ou d'une colonne d'ouvertures de passage de lumière (4) et un angle de décalage de 180° est ménagé entre deux ouvertures de passage de lumière (4) d'une diagonale d'ouvertures de passage de lumière (4).
